Europäisches Patentamt

**European Patent Office**

**Office européen des brevets**

(11) Numéro de publication: **0 327 967 B1**

## (12) FASCICULE DE BREVET EUROPEEN

(45) Date de publication de fascicule du brevet: **17.03.93** (51) Int. Cl.5: **H04J 15/00**

(21) Numéro de dépôt: **89101800.4**

(22) Date de dépôt: **02.02.89**

(54) **Réseau optique à multiplexage temporel.**

(30) Priorité: **08.02.88 FR 8801453**

(43) Date de publication de la demande:
**16.08.89 Bulletin 89/33**

(45) Mention de la délivrance du brevet:
**17.03.93 Bulletin 93/11**

(84) Etats contractants désignés:
**AT BE CH DE ES FR GB IT LI NL SE**

(56) Documents cités:
**EP-A- 0 081 296**
**DE-A- 3 029 109**
**US-A- 3 781 722**

**TECHNICAL DIGEST - WESTERN ELECTRIC,
no. 75, septembre 1984, pages 9-10, New
York, US; S.S. CHENG et al.: "Subscriber loop
architecture"**

**PATENT ABSTRACTS OF JAPAN, vol. 9, no.
240 (E-345)[1963], 26 septembre 1985, page
25 E 345 & JP-A-60 90 443**

(73) Titulaire: **Société Anonyme dite: CEGELEC**
**13, rue Antonin Raynaud**
**F-92309 Levallois-Perret(FR)**

(72) Inventeur: **Tardy, André**
**19 avenue d'Arpajon**
**F-91520 Egly(FR)**
Inventeur: **Jurczyszyn, Michel**
**68 rue Gabriel-Péri**
**F-94200 Ivry sur Seine(FR)**

(74) Mandataire: **Weinmiller, Jürgen et al**
**Lennéstrasse 9 Postfach 24**
**W-8133 Feldafing (DE)**

## Description

La présente invention concerne un réseau optique à multiplexage temporel.

Un tel réseau est destiné à permettre à des capteurs de transmettre des informations sur un support de transmission commun vers une station de contrôle. Il s'applique à la conduite de processus industriels, dans la surveillance d'installations par la multiplication des échanges d'informations entre le processus et la salle de commande centralisée. Cette dernière comporte un générateur d'impulsions lumineuses dont la fréquence détermine la fréquence d'échantillonnage ou fréquence de prélèvement des informations. Ces impulsions sont transmises par une fibre optique à un coupleur optique passif à architecture de type étoile, situé à proximité du processus, et qui répartit des impulsions lumineuses précitées vers N capteurs (Cf. également document DE-A-3 029 109 décrivant une architecture de ce type) ; il récupère les impulsions modulées par les capteurs et les transmet par l'intermédiaire d'une fibre optique à la salle de commande centralisée qui comprend un détecteur, un amplificateur et un démultiplexeur.

Selon un mode préféré, le fonctionnement du réseau est le mode de rétroréflexion où une seule fibre suffit à la transmission aller-retour des impulsions (voir également document TECHNICAL DIGEST-WESTERN ELECTRIC, no.75, Sept. 84, Page 9-10). On a alors un décalage temporel de 10 nanosecondes par mètre de fibre.

Comme les liaisons entre le coupleur et les capteurs ont des longueurs voisines, il est nécessaire pour le multiplexage temporel d'insérer sur chacune des N voies de mesure une ligne à retard dont la longueur dépend de la largeur temporelle des impulsions et du nombre de voies N.

Le retard temporel entre deux voies d'acquisition ne peut être inférieur à la largeur impulsionnelle T. La longueur unitaire de ligne à retard à fibre optique $l_o$ nécessaire à la séparation de deux voies de mesure est au moins égale à $(T/10$ ns$)$ mètres. Pour N voies, la longueur totale de ligne à retard s'établit à $N(N-1)/2 \times l_o$. Avec $N = 64$ et $l_o = 5$ m cette longueur totale est de 10 Km et apparaît prohibitive. Une longueur unitaire $l_o$ de 5 m traduit déjà un débit binaire de 20 M bits/s, débit important qu'il est possible d'augmenter mais au prix d'une complexité accrue de l'électronique d'acquisition.

La présente invention a pour but d'éviter ces inconvénients et de mettre en oeuvre un réseau à N voies ($N = 64$ par exemple) n'impliquant pas l'utilisation de lignes à retard de longueurs prohibitives.

La présente invention a pour objet un réseau optique à multiplexage temporel destiné à connecter par l'intermédiaire de fibres optiques N capteurs d'informations, associés à un processus industriel et agissant sur N interrupteurs optiques, à une salle de commande centralisée comprenant un émetteur d'impulsions lumineuses, dont la fréquence détermine la fréquence de prélèvement des informations, et un récepteur des impulsions lumineuses modulées issues des N capteurs d'informations comportant un détecteur, un amplificateur et un démultiplexeur, ledit émetteur et ledit récepteur étant reliés aux N interrupteurs par un répartiteur à fibres optiques en étoile, caractérisé par le fait que ledit répartiteur comprend des coupleurs intermédiaires à $1 + 2$ accès connectés respectivement à une pluralité de coupleurs à $1 + n$ accès, n étant un sous-multiple de N, et que chacune desdites fibres optiques sert à la transmission aller-retour des informations. La longueur totale L des lignes à retard à fibre optique insérées sur les N voies de mesure est égale à $N/2 \times [n-1 + (LogN-Logn)/Log2] \times l_o$, $l_o$ étant la longueur unitaire de ligne à retard nécessaire à la séparation de deux voies de mesure.

Selon un mode de réalisation préférentiel, N étant égal à 64, ledit répartiteur est relié par deux câbles optiques, dont l'un comporte une ligne à retard de longueur $32 \, l_o$, respectivement à deux coupleurs intermédiaires à $1 + 2$ accès dont l'un des deux accès est muni d'une ligne à retard de longueur $16 \, l_o$, ces deux coupleurs intermédiaires étant reliés chacun à deux coupleurs à $1 + 16$ accès, dont 15 des 16 accès sont munis respectivement de lignes de retard de longueurs allant de $l_o$ à $15 \, l_o$.

Lorsque les N voies de mesure sont localisées par exemple dans deux sites géographiques différents, il est possible de séparer les deux câbles optiques et leurs capteurs associés en deux sous ensembles.

D'autres caractéristiques et avantages de la présente invention apparaîtront au cours de la description suivante de modes de réalisation donnés à titre illustratif mais nullement limitatif. Dans le dessin annexé

- La figure 1 montre très schématiquement un exemple de répartiteur en étoile à 64 voies mettant un oeuvre des coupleurs à $1 + 16$ accès,
- La figure 2 montre très schématiquement un autre exemple de répartiteur à 64 voies dont les capteurs se trouvent dans des sites géographiques différents.

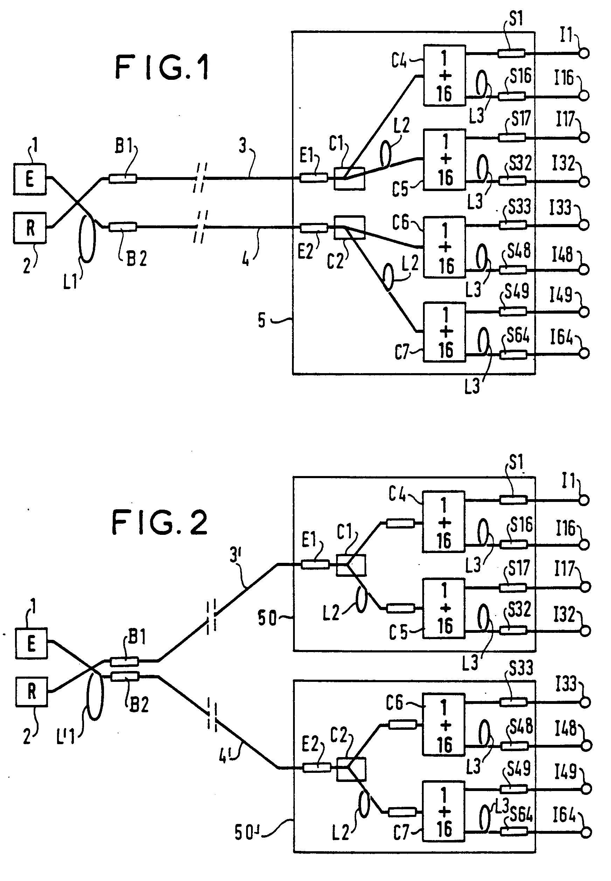

On voit dans la figure 1 une source 1 constituée par une diode laser impulsionnelle dont la fréquence des impulsions est de 5 KHz, la largeur des impulsions est de 20ns et la longueur d'onde de 0,9 $\mu$m. Cette longueur d'onde est peu critique . La puissance crête d'une impulsion est de 5 W.

Le récepteur 2 comporte une photodiode à avalanche, un récepteur à bande passante élevée, 50 à 100 MHz, fonction de la séparation temporelle entre les informations reçues.

La source 1 et le récepteur 2 sont situés dans une salle de commande centralisée située à quelques centaines de mètres d'un processus industriel où sont disposés N capteurs agissant sur N interrupteurs optiques dont on a référencé simplement $I_1$, $I_{16}$, $I_{17}$, $I_{32}$, $I_{33}$, $I_{48}$, $I_{49}$, $I_{64}$.

Pour réaliser la liaison, le réseau optique selon l'invention comporte un câble à deux fibres optiques 3 et 4 qui servent toutes deux à l'émission et à la réception des impulsions. On a noté $B_1$ et $B_2$ les bornes optiques de raccordement. On utilise des fibres dont le coeur a pour diamètre 100 microns et la gaine a pour diamètre 140 microns. On a illustré schématiquement un répartiteur en étoile 5 avec ses bornes d'entrée $E_1$, $E_2$ reliées respectivement aux fibres 3 et 4, et ses bornes de sorties $S_1$, $S_{16}$, $S_{17}$ ect... reliées respectivement aux interrupteurs $I_1$, $I_{16}$, $I_{17}$ etc...

Ce répartiteur comprend deux coupleurs intermédiaires $C_1$ et $C_2$ à 1 + 2 accès connectés à quatre coupleurs $C_4$, $C_5$, $C_6$, $C_7$ à 1 + 16 accès.

Afin de pouvoir assurer la séparation des impulsions, des lignes à retard sont prévues, $I_o$ étant la longueur unitaire de séparation de deux impulsions.

A titre d'exemple, on utilise :
- Une ligne à retard $L_1$ de longueur 32 $I_o$ sur la fibre 4.
- Une ligne à retard $L_2$ de longueur égale à 16 $I_o$ entre les coupleurs $C_1$ et $C_5$ et entre les coupleurs $C_2$ et $C_7$.
- Des lignes à retard $L_3$ variant entre 0 et 15 $I_o$ respectivement sur chacune des voies incorporant les interrupteurs $I_1$ à $I_{16}$ ou $I_{17}$ à $I_{32}$ etc...

Grâce à la disposition selon l'invention, mettant en oeuvre des coupleurs intermédiaires, la longueur totale des lignes à retard est divisée par 3,7 par rapport à l'arrangement de l'art antérieur.

Ainsi pour $I_o$ égale respectivement à 5 mètres et 3 mètres, on avait des longueurs totales de 10 Km et de 6 Km, alors qu'avec la présente invention on n'utilise que 2,7 Km et 1,6 Km.

Dans la figure 2 on a représenté des éléments analogues à ceux de la figure 1 par les mêmes nombres de références. La différence réside dans le fait que les interrupteurs $I_1$ à $I_{32}$ ne se trouvent pas sur le même site géographique que les interrupteurs $I_{33}$ à $I_{64}$. La conception du répartiteur selon l'invention permet de séparer les coupleurs $C_1$, $C_4$, $C_5$ et les coupleurs $C_2$, $C_6$, $C_7$ en deux répartiteurs 50 et 50' reliées par des câbles 3' et 4' à la salle de commande centralisée. La ligne à retard $L'_1$ doit être ajustée en fonction de la distance entre les deux sites géographiques concernés.

La structure du réseau selon l'invention est donc flexible et évolutive.

Elle met en oeuvre le principe de l'acquisition des données par multiplexage temporel et transmission bidirectionnelle, ce qui entraîne une économie de lignes.

L'utilisation de fibres optiques et d'interrupteurs optiques rend le dispositif totalement insensible aux perturbations électromagnetiques et aux défauts d'isolement électrique.

La vitesse de scrutation est de 1 capteur par milliseconde, ce qui est extrêmement rapide.

Bien entendu l'invention n'est pas limitée au mode de réalisation qui vient d'être décrit. Le nombre N = 64 n'a été donné qu'à titre d'exemple.

**Revendications**

1. Réseau optique à multiplexage temporel destiné à connecter par l'intermédiaire de fibres optiques N capteurs d'informations, associés à un processus industriel et agissant sur N interrupteurs optiques, à une salle de commande centralisée comprenant un émetteur d'impulsions lumineuses (1), dont la fréquence détermine la fréquence de prélèvement des informations, et un récepteur (2) des impulsions lumineuses modulées issues des N capteurs d'informations comportant un détecteur, un amplificateur et un démultiplexeur, ledit émetteur et ledit récepteur étant reliés aux N interrupteurs par un répartiteur à fibres optiques en étoile, caractérisé par le fait que ledit répartiteur comprend des coupleurs intermédiaires ($C_1$ et $C_2$) à 1 + 2 accès connectés respectivement à une pluralité de coupleurs ($C_4$, $C_5$, $C_6$, $C_7$) à 1 + n accès, n étant un sous-multiple de N, que chacune desdites fibres optiques sert à la transmission aller-retour des informations, et que la longueur totale L des lignes à retard à fibre optique ($L_1$, $L_2$, $L_3$...) insérées sur les N voies de mesure est égale à N/2 x [n-1 + (LogN-Logn)/Log2] x $I_o$, $I_o$ étant la longueur unitaire de ligne à retard nécessaire à la séparation de deux voies de mesure.

2. Réseau optique selon la revendication 1, caractérisé par le fait que N étant égale à 64, ledit répartiteur est relié par deux câbles optiques, dont l'un comporte une ligne à retard de longueur 32 $I_o$, respectivement à deux coupleurs intermédiaires à 1 + 2 accès dont l'un des deux accès est muni d'une ligne à retard 16 $I_o$, ces deux coupleurs intermédiaires étant reliés chacun à deux coupleurs à 1 + 16 accès, dont 15 des 16 accès sont munis respectivement de lignes de retard de longueurs allant de $I_o$ à 15 $I_o$.

## Claims

1. Time-division multiplex optical network intended to connect by means of optical fibres N data sensors associated with an industrial process and operating on N optical switches to a centralised control room including a light pulse emitter (1) whose frequency determines the data acquisition frequency and a receiver (2) for modulated light pulses from the N data sensors comprising a detector, an amplifier and a demultiplexer, said emitter and said receiver being connected to the N switches by a star optical fibre distributor, characterised in that said distributor comprises intermediate couplers ($C_1$ and $C_2$) with $1+2$ ports respectively connected to a plurality of couplers ($C_4$, $C_5$, $C_6$, $C_7$) with $1+n$ ports where n is a submultiple of N, in that each of said optical fibres is used for two-way transmission of data and in that the total length L of the optical fibre delay lines ($L_1$, $L_2$, $L_3$, etc) inserted into the N measurement channels is equal to $N/2 \times [n-1 + (LogN-Logn)/Log2] \times l_o$, where $l_o$ is the unit length of delay line required to separate two measurement channels.

2. Optical network according to claim 1 characterised in that, N being equal to 64, said distributor is connected by two optical cables one of which incorporates a delay line of length 32 $l_o$ respectively to two intermediate couplers with $1+2$ ports of which one of the two ports is provided with a delay line 16 $l_o$, said two intermediate couplers being each connected to two couplers with $1+16$ ports 15 of the 16 ports of which provided with respective delay lines with lengths from $l_o$ through 15 $l_o$.

## Patentansprüche

1. Optisches Netz mit zeitlicher Multiplexierung zur Verbindung von N Informationsgebern, die einem industriellen Prozeß zugeordnet sind und auf N optische Schalter einwirken, über Lichtleitfasern mit einem zentralen Steuerraum, in dem ein Lichtimpulssender (1), dessen Frequenz die Informationsabfragefrequenz bestimmt, und ein Empfänger (2) von modulierten Lichtimpulsen vorgesehen sind, die von den N Gebern stammen, wobei der Empfänger einen Detektor, einen Verstärker und einen Demultiplexer aufweist und der Sender und der Empfänger mit den N Schaltern über eine sternförmigen Lichtleitfaserverteiler verbunden sind, dadurch gekennzeichnet, daß der Verteiler Zwischenkoppler (C1 und C2) mit $1+2$ Anschlüssen aufweist, die mit einer Mehrzahl von Kopplern (C4, C5, C6, C7) mit $1+n$ Anschlüssen verbunden sind, wobei n ein Untervielfaches von N ist, daß jede der Lichtleitfasern zur Übertragung der Informationen in beiden Richtungen dient und daß die Gesamtlänge L der Verzögerungsleitungen (L1, L2, L3....), die in die N Meßkanäle eingefügt sind, gleich $(Nl_o/2) [n-1 + (LogN-Logn)/Log2]$ ist, wobei $l_o$ die Einheitslänge einer Verzögerungsleitung ist, die für die gegenseitige Trennung zweier Meßkanäle erforderlich ist.

2. Optisches Netz nach Anspruch 1, dadurch gekennzeichnet, daß für N = 64 der Verteiler durch zwei optische Kabel, von denen das eine eine Verzögerungsleitung einer Länge 32 $l_o$ enthält, an je einen von zwei Zwischenkopplern mit $1+2$ Anschlüssen angeschlossen ist, wobei einer dieser beiden Anschlüsse mit einer Verzögerungsleitung eines Werts 16 $l_o$ versehen ist, während diese beiden Zwischenkoppler je mit zwei Kopplern von $1+16$ Anschlüssen verbunden sind, wobei 15 dieser 16 Anschlüsse mit Verzögerungsleitungen versehen sind, deren Wert von $l_o$ bis 15 $l_o$ variiert.

FIG.1

FIG.2